# FASCICULE DE BREVET EUROPEEN

(11) **EP 1 905 189 B1**
(45) Date de publication et mention de la délivrance du brevet: **15.01.2020**
(21) Numéro de dépôt: 06778958.6
(22) Date de dépôt: 20.06.2006
(51) Int. Cl.: H04L 9/32

(54) **SYSTÈME DE GESTION DE DONNÉES D'AUTHENTIFICATION REÇUES PAR SMS POUR UN ACCÈS À UN SERVICE**
SYSTEM ZUM VERWALTEN VON AUTHENTIFIZIERUNGSDATEN FÜR DEN ZUGANG ZU EINEM DIENST
SYSTEM FOR MANAGING AUTHENTICATING DATA FOR ACCESS TO A SERVICE

(30) Priorité: 23.06.2005 FR 0506421
(43) Date de publication de la demande: 02.04.2008
(73) Titulaire: Orange, 75015 Paris (FR)
(72) Inventeur: DAGORN, Anne-Sophie, F-35000 Rennes (FR); PICQUENOT, David, F-14280 Saint Contest (FR); LEMOINE, Pierre, F-14970 Benouville (FR)
(74) Mandataire: Regimbeau
(86) Numéro de dépôt international: PCT/FR2006/050612
(87) Numéro de publication internationale: WO 2006/136752

(56) Documents cités:
- WO-A-01/15381
- WO-A1-2005/036822
- DE-A1- 10 102 779
- US-A1- 2002 169 966
- US-A1- 2004 193 925
- US-A1- 2006 005 024
- US-A1- 2006 005 033
- AHMAD A ET AL: "SIM-Based WLAN Authentication for Open Platforms", INTEL TECHNOLOGY JOURNAL, XX, US, 1 August 2003 (2003-08-01), pages 1-9, XP002271512,
- 3GPP TSG SA WG3 SECURITY: "Technical Specification Group Service and System Aspects; Wireless Local Area Network (WLAN) Interworking Security; (Release 6)", 3GPP TS 33.CDE V0.1.0, XX, XX, 8 October 2002 (2002-10-08), pages 1-31, XP002283825,
- JEONG J ET AL: "A XML-BASED SINGLE SIGN-ON SCHEME SUPPORTING MOBILE AND HOME NETWORK SERVICE ENVIRONMENTS", IEEE TRANSACTIONS ON CONSUMER ELECTRONICS, IEEE SERVICE CENTER, NEW YORK, NY, US, vol. 50, no. 4, 1 November 2004 (2004-11-01), pages 1081-1086, XP001224744, ISSN: 0098-3063, DOI: 10.1109/TCE.2004.1362502

## Description

La présente invention concerne un système de gestion d'au moins une donnée d'authentification d'accès à un service.

L'invention trouve une application particulièrement avantageuse dans le domaine des services sur terminaux mobiles, notamment les téléphones mobiles, et des services d'authentification d'accès aux sites Web.

Aujourd'hui, un utilisateur disposant d'un équipement d'accès aux services offerts sur des sites Web mémorise en moyenne cinq couples d'identifiant et de mot de passe pour s'authentifier auprès des sites qu'il consulte régulièrement, tels que messagerie, banque en ligne, sites marchands, etc. A ces données d'authentification s'ajoutent celles utilisées dans la vie professionnelle et dans la vie privée, comme un code de carte bancaire, un code de téléphone portable, un code d'accès à un immeuble, etc. En général, le nombre de données d'authentification à retenir par un individu dépasse le plus souvent ses possibilités de mémorisation. Pour remédier à cette difficulté, certains en sont réduits à utiliser le même code ou le même couple identifiant/mot de passe pour plusieurs applications différentes. On comprendra que de tels comportements abaissent de manière évidente la sécurité des accès.

C'est ainsi que se sont développés de nombreux systèmes de gestion de données d'authentification qui présentent tous l'avantage pour l'utilisateur de ne plus avoir à mémoriser un grand nombre de données d'authentification.

Parmi les solutions proposées, on retiendra les logiciels de gestion couplés à un navigateur Web dans des ordinateurs personnels. Pour la plupart, ces logiciels connus permettent le stockage des identifiants/mots de passe associés aux sites Web visités par l'utilisateur. Certains d'entre eux permettent en outre la saisie automatique desdits identifiants/mots de passe dans les formulaires appropriés lors de chaque connexion à ces sites. Par ailleurs, les données d'authentification sont stockées dans des fichiers protégés par une clé d'accès.

On connaît également de l'état de la technique des systèmes de gestion qui permettent à l'utilisateur de stocker ses identifiants/mots de passe dans une carte à puce via un lecteur approprié relié à un ordinateur personnel. Ces systèmes offrent les mêmes fonctionnalités que les logiciels dédiés cités plus haut, mais avec l'avantage toutefois d'offrir un stockage des données d'authentification sur un support sécurisé du type carte à puce.

On constatera cependant que ce type de système de gestion impliquant une carte à puce présente l'inconvénient de nécessiter la présence d'un lecteur de cartes sur chaque ordinateur personnel où il doit être mis en œuvre ainsi qu'une carte à puce spécialement dédiée à cette application et que l'utilisateur doit toujours avoir avec lui s'il veut pouvoir à tout moment bénéficier du service offert par le système de gestion de ses identifiants et mots de passe.

La demande internationale publiée sous le numéro WO 2005/036822 A1, déposée au nom de la Demanderesse, décrit un système comprenant un terminal utilisateur, un terminal mobile équipé d'une carte à mémoire, et une liaison sans fil (telle qu'une liaison Bluetooth) par l'intermédiaire de laquelle un module d'interface tel qu'un module PC/SC peut assurer une transmission de données d'authentification entre la carte de mémoire et le terminal utilisateur. Ce système peut être utilisé dans le cadre d'une authentification du terminal utilisateur auprès d'un réseau de télécommunications. Ce document n'expose toutefois pas de solution pour le stockage et la gestion de données d'authentification correspondant à plusieurs services indépendants. Il est aussi connu de l'état de l'art les documents

XP002271512 "SIM-Based WLAN Authentication for Open Platforms"

XP002283825 "Technical Spécification Group Service and System Aspects; Wireless Local Area Network (WLAN) Interworking Security; (Release 6)" ainsi que le document WO0115381 qui concerne un système d'authentification d'utilisateur utilisant une seconde voie de connexion. Ce système permet d'effectuer des opérations telles que le commerce électronique, des transactions boursières par Internet, des opérations bancaires par téléphone, dans lesquelles, si un utilisateur fait une demande partant d'une plage prédéterminée, une authentification d'utilisateur est effectuée au moyen d'une seconde voie de connexion. Il est préférable que cette seconde voie de connexion soit matérialisée par un réseau téléphonique et un système de communication.

Aussi, le problème technique à résoudre par l'objet de la présente invention est de proposer un système de gestion d'au moins une donnée d'authentification d'accès à un service, comprenant un équipement d'accès à au moins un service, qui permettrait d'obtenir un niveau de sécurité au moins équivalent à celui présenté par le système de gestion par carte à puce connu, sans nécessiter toutefois de carte spécifique ni de dispositif destiné à la lecture de cette carte.

L'invention est définie par les revendications indépendantes. Les modes de réalisation préférés sont définis par les revendications dépendantes.

L'invention a pour objet un système de gestion d'au moins une donnée d'authentification d'accès à un service, comprenant
- un équipement d'accès à au moins un service,
- un terminal mobile comportant des moyens de gestion de ladite donnée d'authentification et d'un identifiant dudit service,
- une interface de communication entre ledit équipement d'accès et lesdits moyens de gestion,
- une interface logicielle apte à déterminer ledit identifiant de service et à mettre en œuvre lesdits moyens de gestion, à travers l'interface de communication lors d'un accès audit service, au moyen de commandes permettant l'écriture, dans un module de sécurité dudit terminal mobile, de messages courts destinés à être lus par lesdits moyens de gestion.

Ainsi, on comprend que l'implémentation des moyens de gestion de ladite donnée d'authentification dans un terminal mobile, objet usuel que l'utilisateur porte en général toujours avec lui, permet à ce dernier de pouvoir retrouver en permanence ses identifiants et mots de passe, par exemple, et de mettre en œuvre le système de gestion conforme à l'invention sans l'intervention de tout autre support, tel qu'une carte à puce dédiée. D'autre part, comme on le verra en détail plus loin, aucun dispositif particulier lourd et coûteux comme un lecteur de cartes n'est à envisager qui viendrait compromettre la versatilité du système. L'utilisation de messages courts destinés à être écrits dans le module de sécurité permet de commander de manière simple et sécurisée les moyens de gestion.

Conformément à l'invention, lesdits moyens de gestion sont des moyens de stockage et de restitution de ladite donnée d'authentification en association avec ledit identifiant de service.

Selon un aspect de l'invention, les moyens de gestion sont implantés dans un module de sécurité dudit terminal mobile ou dans une mémoire dudit terminal mobile.

Selon un aspect de l'invention, ledit terminal mobile comporte des moyens de communication à travers un réseau de téléphonie mobile, le module de sécurité étant une carte d'identification d'abonné audit réseau de téléphonie. La carte d'identification d'abonné permet le stockage sécurisé de données de confiance tels que des mots de passe ou messages courts pour la gestion de mots de passe.

Tout autre module de sécurité permettant le stockage sécurisé de données est également utilisable, par exemple une carte à puce. Par module de sécurité on entend tout moyen logiciel et/ou matériel formant un environnement de confiance pour le stockage de données et/ou l'exécution de services ou programmes.

Dans une variante, lesdits moyens de gestion sont implantés dans la carte d'identification d'abonné. En pratique, ladite carte d'identification d'abonné peut être une carte SIM ou une carte UICC (Universal Intregrated Circuit Card).

L'utilisation d'un terminal mobile équipé d'une carte d'identification d'abonné, carte SIM notamment, présente un certain nombre d'avantages. Elle offre en effet un degré de sécurité important car la carte n'est pas directement accessible à partir d'un équipement tel qu'un ordinateur personnel. En outre, la carte SIM étant reliée au réseau, il est possible en cas de vol d'effacer à distance les données d'authentification qu'elle contient. De même, il est possible à l'utilisateur d'effectuer des sauvegardes desdites données d'authentification dans le réseau de téléphonie mobile. Enfin, lorsque ladite au moins une donnée d'authentification comprend un identifiant et un mot de passe, on peut envisager que ledit mot de passe est fourni auxdits moyens de gestion par un fournisseur de mots de passe, notamment sur requête établie par liaison téléphonique dans le réseau. Sinon, ledit mot de passe est stocké dans lesdits moyens de stockage, tout comme l'identifiant.

Par ailleurs, un terminal mobile offre de nombreuses fonctionnalités d'interaction avec l'utilisateur qui peuvent être avantageusement exploitées dans le cadre de l'invention, tels qu'un écran et un clavier. On mentionnera plus spécialement l'intérêt du clavier qui permet, en effet, lorsque lesdits moyens de gestion sont protégés en lecture et écriture par un code d'identification, de composer le code PIN d'accès à la carte SIM en toute sécurité plutôt que d'utiliser le clavier de l'ordinateur d'accès, plus sensible aux détournements frauduleux. De même, il est possible de visualiser sur l'écran du terminal les différents identifiants utilisés.

Selon une variante avantageuse, les moyens de gestion sont conçus pour pouvoir être pilotés au moyen d'un module d'interface utilisateur approprié, activé via le clavier et l'écran du terminal mobile. De cette manière, l'utilisateur peut à loisir consulter sa liste de mot de passe, supprimer certains mots de passe obsolètes, en insérer manuellement de nouveaux, transmettre l'un ou l'autre mot de passe par message à une tierce personne, etc.

Il faut également signaler la possibilité de pouvoir stocker dans la carte SIM d'autres codes personnels de l'utilisateur, comme des digicodes, un mot de passe d'accès à une messagerie vocale, des codes antivol divers, des codes de services de télécommunications, etc.

Selon une forme de réalisation particulière de l'invention, ledit équipement d'accès est intégré audit terminal mobile. On envisage dans ce cas que ledit terminal mobile est du type téléphone intelligent, c'est-à-dire un téléphone mobile muni des fonctions d'un assistant numérique personnel ou d'un ordinateur.

D'une manière générale, ledit identifiant de service est constitué par une adresse dudit service dans un réseau de télécommunication, par exemple l'URL du site Web fournissant ledit service. Cependant, l'invention prévoit, avantageusement, que ledit identifiant de service est constitué par un condensé d'une adresse dudit service dans un réseau de communication, à savoir notamment un condensé obtenu par application d'une fonction de hachage sur ladite adresse URL. Ce mode de réalisation permet en effet d'augmenter notablement le niveau de sécurité du système selon l'invention. En pratique, ledit condensé est réalisé par ladite interface logicielle et fourni aux moyens de gestion du terminal mobile, la carte SIM dans l'exemple explicité plus haut. Dans ce cas, les identifiants de service sont de préférence stockés sous forme de condensé.

Selon une caractéristique du système de gestion, objet de l'invention, ladite interface de communication est une interface de communication à travers un lien local de communication. En particulier, ledit lien local est, au choix, une liaison infra-rouge, une liaison Bluetooth, une liaison NFC, une liaison par câble.

Enfin, avantageusement, ladite interface de communication est une interface de communication par modem, utilisant de préférence des commandes AT pour écrire et lire des messages courts dans ladite carte d'identification d'abonné.

Selon un mode de réalisation particulier, le ledit terminal mobile comporte des moyens pour communiquer avec un fournisseur de données d'authentification accessible via un réseau de téléphonie mobile. Le mot de passe peut ainsi être fourni aux moyens de gestion par un fournisseur de mots de passe.

La présente invention concerne également un terminal mobile, comportant des moyens de gestion d'au moins une donnée d'authentification d'accès à un service et d'un identifiant dudit service, lesdits moyens de gestion étant reliés à un équipement d'accès audit service par une interface de communication, lesdits moyens de gestion étant mis en œuvre, à travers ladite interface de communication lors d'un accès audit service, par une interface logicielle apte à déterminer ledit identifiant de service, au moyen de commandes permettant l'écriture, dans un module de sécurité dudit terminal mobile, de messages courts destinés à être lus par lesdits moyens de gestion.

L'invention concerne en outre une interface logicielle entre un équipement d'accès à au moins un service et des moyens de gestion d'au moins une donnée d'authentification et d'un identifiant dudit service, ladite interface logicielle étant apte à déterminer ledit identifiant de service et à commander lesdits moyens de gestion à travers une interface de communication, au moyen de commandes permettant l'écriture, dans un module de sécurité dudit terminal mobile, de messages courts destinés à être lus par lesdits moyens de gestion.

L'invention concerne également un équipement d'accès à au moins un service, comprenant une telle interface logicielle.

La présente invention concerne également un procédé de gestion d'au moins une donnée d'authentification d'accès à un service pour un équipement d'accès comprenant des moyens d'accès à au moins un service, le procédé consistant, lors de l'accès audit service, à exécuter au moyen d'une interface logicielle avec lesdits moyens d'accès, les étapes consistant à:
- détecter une demande d'au moins une donnée d'authentification pour l'accès audit service,
- déterminer un identifiant dudit service,
- mettre en œuvre des moyens de gestion dans un terminal mobile de ladite donnée d'authentification et dudit identifiant, à travers une interface de communication entre ledit équipement d'accès et lesdits moyens de gestion, au moyen de commandes permettant l'écriture, dans un module de sécurité dudit terminal mobile, de messages courts destinés à être lus par lesdits moyens de gestion.

Le procédé selon l'invention est avantageusement mis en œuvre au moyen d'une simple interface logicielle communicant avec les moyens d'accès au service et apte à mettre en œuvre, notamment à commander, les moyens de gestion de ladite donnée d'authentification et dudit identifiant.

La description qui va suivre en regard des dessins annexés, donnés à titre d'exemples non limitatifs, fera bien comprendre en quoi consiste l'invention et comment elle peut être réalisée.
La figure 1 est un schéma d'une architecture générale d'un système de gestion selon l'invention.
La figure 2 est un diagramme montrant l'algorithme implémenté dans l'interface logicielle du système selon l'invention.
La figure 3 est un schéma montrant un premier mode d'enregistrement de données d'authentification.
La figure 4 un schéma montrant un premier mode d'authentification automatique des données enregistrées selon la figure 3.
La figure 5 est un schéma montrant un deuxième mode d'enregistrement de données d'authentification.
La figure 6 est un schéma montrant un deuxième mode d'authentification automatique des données enregistrées selon la figure 5.
La figure 7 est un schéma montrant un mode d'authentification automatique par OTP.
La figure 8 est un schéma donnant les fonctions d'une architecture Microsoft Windows Mobile.

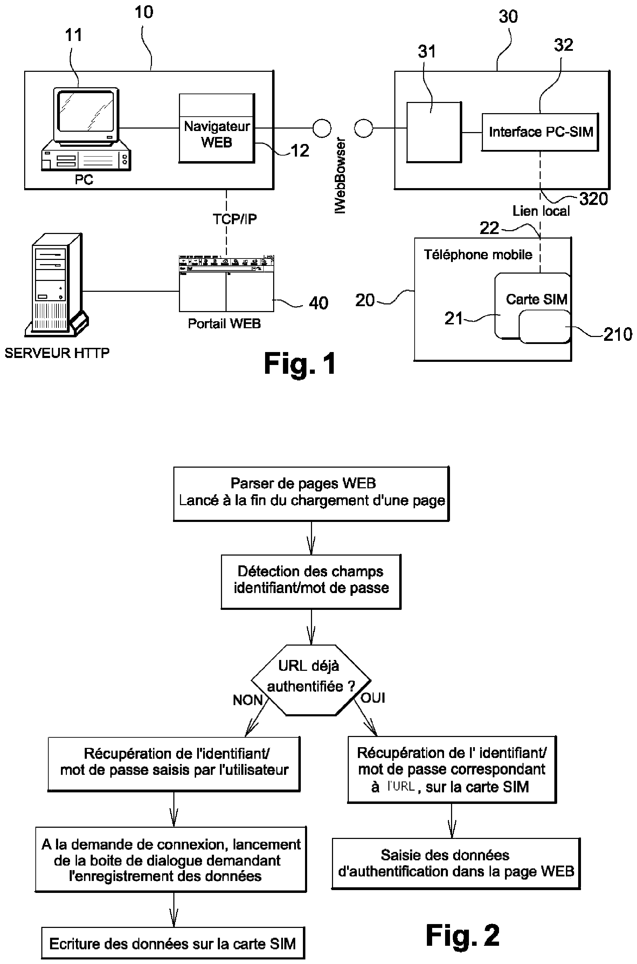

Sur la figure 1 est représentée une architecture pour un système de gestion de données d'authentification d'accès à un service.

Dans l'exemple de réalisation de la figure 1, ce système de gestion comprend un équipement 10 d'accès audit service constitué, d'une part, d'une station 11 de travail informatique, comme un ordinateur personnel (PC), et, d'autre part, d'un logiciel 12 permettant d'explorer le World Wide Web, appelé aussi navigateur Web. C'est à travers ce navigateur 12 qu'un utilisateur dudit équipement 10 peut avoir accès, à travers une liaison TCP/IP par exemple, à des sites Web 40 de fourniture de services.

Dans la plupart des cas, la fourniture effective des services commandés par les utilisateurs sur le World Wide Web exige la présentation de données d'authentification desdits utilisateurs dans des formulaires prévus à cet effet sur les sites Web 40 correspondants.

C'est en raison du nombre de plus en plus grand de données d'authentification qu'un même utilisateur doit aujourd'hui mémoriser que l'invention propose un système de gestion ayant principalement pour but de :
- détecter les formulaires d'authentification sur des pages Web,
- stocker de manière sécurisée dans des moyens de gestion qui seront explicités plus loin, les données d'authentification, le plus souvent un identifiant et un mot de passe, saisis lors d'un premier accès à un site Web 40 sur un formulaire d'authentification,
- restituer ces données afin d'effectuer une authentification automatique sur ce site Web 40 lors des accès suivants.

Le système de gestion de la figure 1 comporte également un terminal mobile 20 qui, dans cet exemple, est un téléphone mobile équipé d'une carte 21 d'identification d'abonné à un réseau de télécommunication. Cette carte 21, telle qu'une carte SIM, est insérée dans le téléphone mobile 20 et permet principalement la sécurisation de l'accès au réseau de l'opérateur mobile. La carte SIM peut être remplacée par une carte UICC si elle est introduite dans un téléphone mobile dit de troisième génération (3G). De manière habituelle, l'accès à la carte SIM ou UICC 21 est protégé en lecture et en écriture par un code secret connu sous le nom de code PIN.

Dans le cadre de l'invention, la carte 21 d'identification est également utilisée pour héberger des moyens de gestion des données d'authentification et d'un identifiant du service auquel elles permettent d'accéder. Ledit identifiant de service est, par exemple, l'adresse URL du site Web correspondant ou encore un condensé obtenu par application d'une fonction de hachage sur ladite adresse URL.

Lesdits moyens de gestion sont globalement représentés sur la figure 1 par la référence 210 qui désigne une application permettant le stockage sécurisé desdites données et de l'identifiant de service, ainsi que leur restitution aux fins de saisie automatique dans un formulaire d'authentification pour l'accès audit service. Cette application 210 peut être soit une application de type Javacard, soit un simple fichier protégé par ledit code PIN.

Enfin, on observera sur la figure 1 que le terminal mobile 20 comporte une extrémité 22 d'un lien local avec un module 30 d'interfaçage entre le terminal et l'équipement 10 d'accès qui va maintenant être décrit en détail.

L'équipement 10 d'accès et le module 30 d'interfaçage sont de préférence intégrés dans un même dispositif informatique, par exemple dans un ordinateur personnel (PC) ou un serveur de traitement de données.

Ledit module 30 d'interfaçage se présente, par exemple, sous la forme d'un module logiciel adapté pour s'interfacer avec le navigateur Web 12. Il comporte une interface logicielle 31 avec le navigateur et une interface de communication 32 pour l'accès au téléphone mobile via le lien local de communication.

L'interface logicielle 31 a notamment pour rôle d'identifier, d'analyser chaque page Web chargée par le navigateur 12, d'y détecter la présence d'un formulaire d'authentification et de déclencher un mécanisme d'authentification de l'utilisateur permettant la saisie automatique des champs d'authentification du formulaire.

Dans le cas où le navigateur Web 12 est Internet Explorer, l'interface logicielle 31 est implémentée sous forme d'objet COM (« Component Object Model ») et déclarée comme un « Browser Helper Object ». De cette façon, elle est lancée automatiquement par le navigateur Internet Explorer. Après démarrage du navigateur, l'interface 31 instancie un objet de la classe nommée « IWebBrowser2 » représentant une interface avec le navigateur Web 12 et permettant l'analyse et le traitement des pages Web chargées par ce dernier. Pour chaque page Web, l'interface 31 recherche un formulaire de type <FORM> comportant un élément <INPUT> de type "text" suivi d'un seul élément <INPUT> de type "password". Si la page Web correspond à ces critères, l'interface logicielle 31 interroge les moyens 210 de gestion de la carte 21 pour savoir si l'adresse correspondant à la page Web traitée est référencée. Si c'est le cas, l'interface 31 demande aux moyens 210 de gestion de lui retourner les données d'authentification correspondant à ladite page Web, lesquelles sont ensuite injectées automatiquement dans la page Web après demande d'un code PIN à l'utilisateur, en général le code PIN du terminal mobile ou encore un code PIN dédié à l'application d'authentification. Dans le cas contraire, l'utilisateur est invité à saisir ses identifiants et mots de passe, qui sont alors capturés par l'interface logicielle 31 et envoyés aux moyens 210 de gestion accompagnés de l'adresse du site Web. Ensuite, ces trois éléments de données sont stockés dans la carte 21 dans un fichier protégé par code PIN. Selon les implémentations, notamment en fonction du choix de l'interface 32 de communication, le code PIN pourra être demandé sur le terminal mobile 20 ou sur l'ordinateur 11.

Il est bien entendu préférable pour des raisons de sécurité que le code PIN soit saisi sur le terminal mobile 20 plutôt que sur l'ordinateur 11 qui est plus vulnérable aux tentatives d'usurpation d'accès. On comprend ainsi l'intérêt pour le système de gestion conforme à l'invention d'utiliser un terminal mobile équipé d'un clavier de saisie intégré.

La fonction d'analyseur (« parser ») de l'interface logicielle 31 permet de parcourir le contenu d'une page Web afin de détecter la présence d'un formulaire d'authentification. Cette fonction est lancée lorsque le téléchargement d'une page Web est complet. La page Web est parcourue de la façon suivante:
- récupération du document HTML,
- parcours des éléments <FORM> contenus dans le document,
- parcours de tous les éléments contenus dans un élément <FORM> et récupération des éléments <INPUT>,
- récupération du type des éléments <INPUT> afin de trouver l'identifiant, le mot de passe et le champ de soumission du formulaire,
- parcours des éléments <FRAME> du document et appel récursif de la fonction pour chaque élément.

La fonction de détection des formulaires d'authentification permet donc de détecter les champs identifiant/mot de passe dans une page Web. Un formulaire d'authentification est détecté lorsqu'il est composé d'un identifiant suivi d'un mot de passe. Le document HTML est parcouru à l'aide de l'analyseur de pages Web et pour chaque élément "<FORM>" les éléments "<INPUT>" sont parcourus afin de déterminer si la configuration suivante est réalisée :

| | |
|---|---|
| <INPUT> de type "text" | identifiant |
| <INPUT> de type "password" | mot de passe |

Si le document HTML possède un tel formulaire d'authentification, il y a ensuite deux possibilités:
- si c'est une première visite du site Web, les données d'authentification saisies par l'utilisateur sont stockées sur la carte 21, à condition que l'utilisateur accepte l'enregistrement de ces données.
- si l'utilisateur s'est déjà authentifié sur ce site Web, les données d'authentification sont lues dans la carte 21 et automatiquement saisies dans le formulaire.

L'algorithme exécuté par l'interface logicielle 31 est représenté sur la figure 2.

L'interface 32 de communication a pour rôle de permettre à l'interface logicielle 31 qui vient d'être décrite d'accéder aux moyens 210 de gestion via le terminal mobile 20.

Dans le cas où la carte 21 du terminal mobile 20 est une carte SIM, l'interface 32 est constituée par un module hébergé dans l'ordinateur 11 dénommé « Client SIM Access » qui communique avec la carte SIM 21 via le téléphone mobile 20 et un lien local dont l'interface 32 porte une extrémité 320, l'autre extrémité 22 étant située sur le terminal 20.

Ledit lien local peut être une liaison infra-rouge IrDA, une liaison radio courte distance Bluetooth, une liaison très courte distance NFC (« Near Field Communication »), ou encore une liaison par câble.

L'interface 32 de communication peut être implémentée par des commandes AT du modem dans lequel est logée la carte SIM. En effet, il est possible d'utiliser lesdites commandes AT permettant l'écriture et la lecture de messages courts (SMS) dans la carte SIM pour déclencher les moyens 210 de gestion hébergés dans la carte. Il suffit pour cela que ces moyens utilisent le mécanisme "Event Download" décrit dans la norme ETSI GSM 11.14 et s'abonnent à l'événement « EVENT_UNFORMATTED_SMS_PP_UPD » de façon à être activés dès l'écriture d'un SMS. Les moyens 210 de gestion n'auront plus qu'à lire le SMS et à traiter les données qui y sont contenues, à générer une réponse et à écrire ladite réponse dans le ficher SMS de la carte SIM. D'une manière générale, les commandes AT sont définies dans la norme ETSI GSM 07.05. Les commandes AT plus spécialement impliquées dans cet exemple d'implémentation sont les commandes d'écriture de SMS dans la carte SIM (*AT+CMGW*) et de lecture de SMS dans la carte SIM (*AT+CMGR*).

La donnée entrante envoyée par commandes AT est le condensé (« hash ») de l'adresse URL du site Web, encapsulé dans un bloc de données. Les données sortantes sont les données d'authentification encapsulées dans la réponse à la commande AT.

L'interface 32 de communication peut également être implémentée au moyen du procédé décrit dans la demande internationale n° PCT FR 03/02802. Dans ce cas, l'interface logicielle 31 utilise un interface PC/SC pour accéder à la carte SIM et des commandes de type APDU (Application Protocol Data Unit) permettant le dialogue avec l'application de gestion.

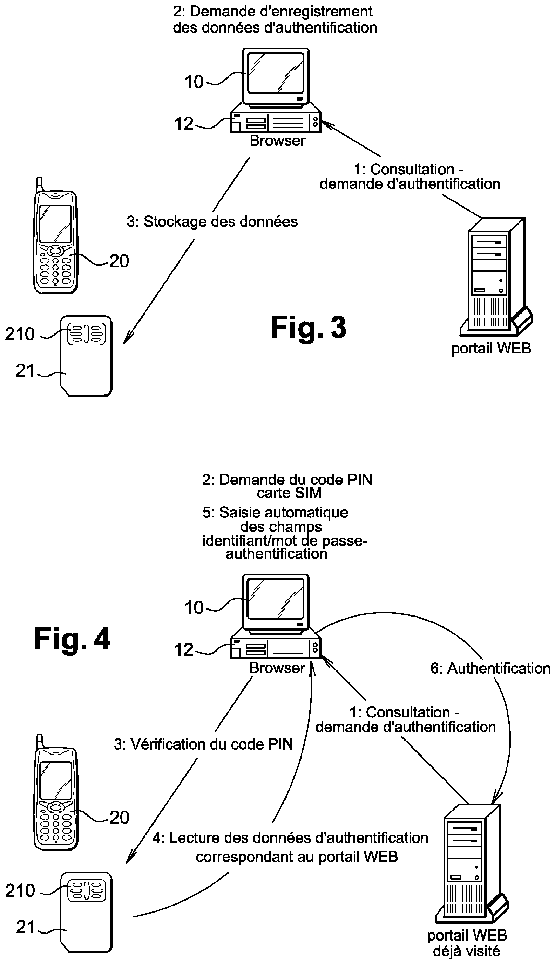

Dans une version simplifiée du système selon l'invention, la fonction de stockage des données d'authentification réalisée par les moyens 210 de gestion est implémentée par un fichier élémentaire (EF) situé dans la carte SIM. Le processus correspondant à cette implémentation est illustrée sur les figures 3 et 4 :
1. lors d'une demande d'authentification, l'interface logicielle 31 envoie l'URL du site Web aux moyens 210 de gestion de la carte SIM 21 via le média choisi pour le lien local (IrDA, Bluetooth, etc),
2. les moyens 210 de gestion attendent une présentation de code PIN, lequel peut être spécifique à l'application de gestion ou égal au code PIN de la carte SIM, et vérifie la validité du code PIN présenté,
3. les moyens 210 de gestion recherchent l'URL fourni dans le fichier élémentaire situé dans la carte SIM,
4. les moyens 210 de gestion renvoient les données d'authentification correspondantes si elles existent, sinon ils renvoient un statut "not found" à l'interface logicielle 31.

Dans une version plus élaborée, la fonction de stockage de données d'authentification réalisée par les moyens 210 de gestion est implémentée par une application hébergée dans la carte SIM 21. Cette application comporte une base de données sécurisée contenant les condensés (« hash ») des URL et les données d'authentification.

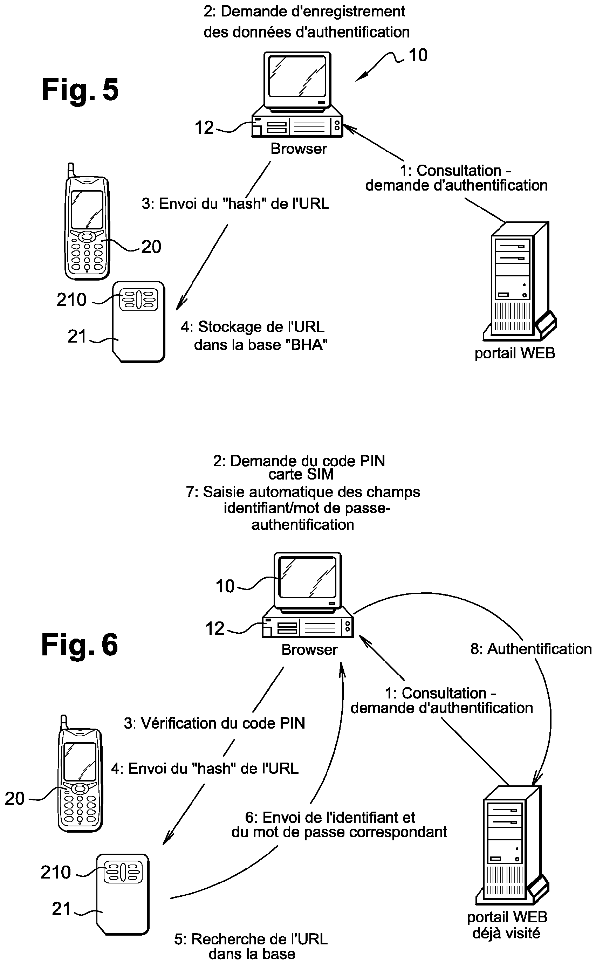

La cinématique correspondant à cette implémentation est illustrée sur les figures 5 et 6 :
1. lors d'une demande d'authentification, l'interface logicielle 31 envoie un condensé de l'URL du site Web à l'application située dans la carte SIM via le média choisi pour le lien local (IrDA, Bluetooth, etc),
2. l'application attend une présentation de code PIN, lequel peut être spécifique à l'application de gestion ou égal au code PIN CHV1 de la carte SIM, et vérifie la validité du code PIN présenté,
3. l'application recherche le condensé dans la base "BHA",
4. l'application renvoie les données d'authentification correspondantes si elles existent, sinon elle renvoie un statut "not found" (« non trouvé ») à l'interface logicielle 31.

Ce dernier procédé utilisant les condensés des URL permet de ne pas avoir à stocker les URL en clair dans la carte SIM. Il est alors impossible de retrouver les sites associés aux données d'authentification en cas de perte de la carte et de vol du code PIN. On peut également envisager de chiffrer ou de brouiller les données d'authentification.

En résumé, les moyens 210 de gestion permettent de :
- stocker de manière sécurisée les données d'authentification (identifiant, mots de passe et adresses de sites Web sous la forme d'URL ou de condensé d'URL) dans un fichier propriétaire de la carte 21,
- authentifier l'utilisateur par présentation de code PIN,
- lire ces données sur la carte 21 pour une authentification automatique,
- utiliser les données d'authentification sur des sites WEB/WAP accédés sur le terminal mobile lui-même,
- visualiser les données d'authentification sur un écran du terminal mobile,
- effectuer des sauvegardes des données d'authentification dans le réseau opérateur,
- gérer les mots de passe de type OTP « One Time Password » (mot de passe à usage unique), comme on le verra plus loin.

Les commandes envoyées à l'application de gestion dans la carte SIM 21 sont encapsulées soit dans un ordre "enveloppe", soit par envoi de commandes APDU (« Application Protocol Data Unit ») propriétaires.

Le format général d'une telle commande est donné par le tableau ci-dessous :(les longueurs des différents champs de commande sont données ici en nombre d'octets) :

| NOM | DESCRIPTION | Longueur |
|---|---|---|
| Tag commande | Spécifie la commande envoyée à l'application de gestion | 1 octet |
| Le | Longueur des données entrantes | 1 |
| Data | Données entrantes | Le |

Le format général d'une réponse à cette commande est donné par le tableau ci-dessous:

| NOM | DESCRIPTION | Longueur |
|---|---|---|
| Tag réponse | Egal au tag de commande correspondant | 1 |
| Ls | Longueur des données sortantes | 1 |
| Data | Données sortantes | Ls |

Les différentes commandes/réponses acceptées par l'application sont :

**Commande de vérification de code PIN "VERIFY_PIN"**

| Demande | | | |
|---|---|---|---|
| NOM/VALEUR | | DESCRIPTION | Longueur |
| Tag | EA | Demande à l'application de gestion de vérifier le code PIN | 1 |
| Ls | Le | Longueur des données entrantes | 1 |
| Data | Data | PIN code | Le |

| Réponse | | | |
|---|---|---|---|
| NOM/VALEUR | | DESCRIPTION | Longueur |
| Tag | EA | Résultat de la présentation du code PIN | 1 |
| Ls | Le | Longueur des données sortantes | 1 |
| Data | Data | Réponses ISO-IEC 7816-4 | Ls |

**Commande de demande de stockage de données d'authentification "STORE_CREDENTIAL"**

| Demande | | | |
|---|---|---|---|
| NOM/VALEUR | | DESCRIPTION | Longueur |
| Tag | E0 | Demande à l'application de gestion de stocker des données d'authentification liées à une URL | 1 |
| Ls | Le | Longueur des données entrantes | 1 |
| Data | url Login Password Domaine type | Authentifiants | Le |

| Réponse | | | |
|---|---|---|---|
| NOM/VALEUR | | DESCRIPTION | Longueur |
| Tag | E0 | Réponse de l'application de gestion à la commande de stockage | 1 |
| Ls | Le | Longueur des données sortantes | 1 |
| Data | Data | Réponses ISO-IEC 7816-4 | Ls |

**Commande pour obtenir des données d'authentification "GET_CREDENTIAL"**

| Demande | | | |
|---|---|---|---|
| NOM/VALEUR | | DESCRIPTION | Longueur |
| Tag | E1 | Demande à l'application de gestion de récupérer des données d'authentification liées à une URL | 1 |
| Ls | Le | Longueur des données entrantes | 1 |
| Data | ReqType | =0x00 si recheche par url =0x01 si recherche par hash(url) | Le |
| | Clé | url ou hash(url) en fonction de ReqType | |

| Réponse | | | |
|---|---|---|---|
| NOM/VALEUR | | DESCRIPTION | Longueur |
| Tag | E1 | Réponse contenant les données d'authentification liées à l'URL | 1 |
| Ls | Le | Longueur des données sortantes | 1 |
| Data | Login | Données d'authentification | Ls |
| | Password | | |
| | Domaine | | |
| | Type | | |

Les données d'authentification sont stockées dans un fichier nommé "EF RDPWD" dont l'accès est protégé par un code PIN. Ce fichier "EF RDPWD" est inséré sous un nouveau répertoire nommé "DF SIMPASS". Le fichier "EF RDPWD" contient des enregistrements de longueur fixe. Il contient les URL ou les condensés des URL des sites web, et les identifiants/mots de passe correspondants, comme indiqué dans le tableau suivant :

| | | |
|---|---|---|
| 0x01 | 01 | URL - identifiant - mot de passe - domaine - config |
| 0x01 | 01 | URL - identifiant - mot de passe - domaine - config |
| | | ... |
| 0x01 | 01 | URL - identifiant - mot de passe - domaine - config |
| 0x00 | FF | FFFFFFFFFFFFFFFFFFFFFFFFFFF |
| 0x00 | FF | ... |
| 0x00 | FF | FFFFFFFFFFFFFFFFFFFFFFFFFFF |

Le premier élément (première colonne du tableau) est un drapeau de présence; il indique si l'enregistrement est écrit (0x01 signifie qu'il y a des données écrites dans l'enregistrement, 0x00 signifie qu'il est vide).

Le deuxième élément (deuxième colonne du tableau) définit le type de données d'authentification qui peut être: 01: statique, ou 10: OTP.

Les champs suivants (troisième colonne du tableau, "URL", "identifiant", "mot de passe", "domaine" et "config"), sont stockés en format TLV (type/longueur/valeur).

L'URL stockée correspond à l'URL du site, elle est mise sous un format particulier pour éviter qu'elle ne soit trop longue. Par exemple, si pour un site d'un opérateur mobile « ABC », l'URL complète est http://www.abc.fr/0/visiteur/PV, l'URL sera stockée sous la forme www.abc.fr.

Suivent l'identifiant, le mot de passe, éventuellement le domaine, et un bloc de données de configuration "config".

En cas de type de mot de passe OTP, le bloc de données de configuration "config" définit un pointeur vers un fichier contenant l'adresse d'un serveur d'OTP.

On décrit maintenant le fonctionnement du système de gestion, objet de l'invention, en combinaison avec un serveur gestionnaire de mots de passe OTP.

On rappelle que l'OTP est un mot de passe à usage unique (« One Time Password ») utilisé pour sécuriser de façon forte et dynamique certains sites. L'OTP résout les problèmes de distribution et de mémorisation des mots de passe. Ce mécanisme fonctionne actuellement de la manière suivante:
1. l'utilisateur se connecte sur un site Web,
2. le site demande un OTP sur un formulaire d'authentification,
3. l'utilisateur appelle un serveur d'OTP en composant un numéro sur son téléphone, en mode USSD (Unstructured Supplementary Services Data) le plus souvent,
4. le serveur d'OTP lui renvoie un mot de passe temporaire à taper dans le formulaire d'authentification,
5. le client est facturé par son opérateur de téléphonie

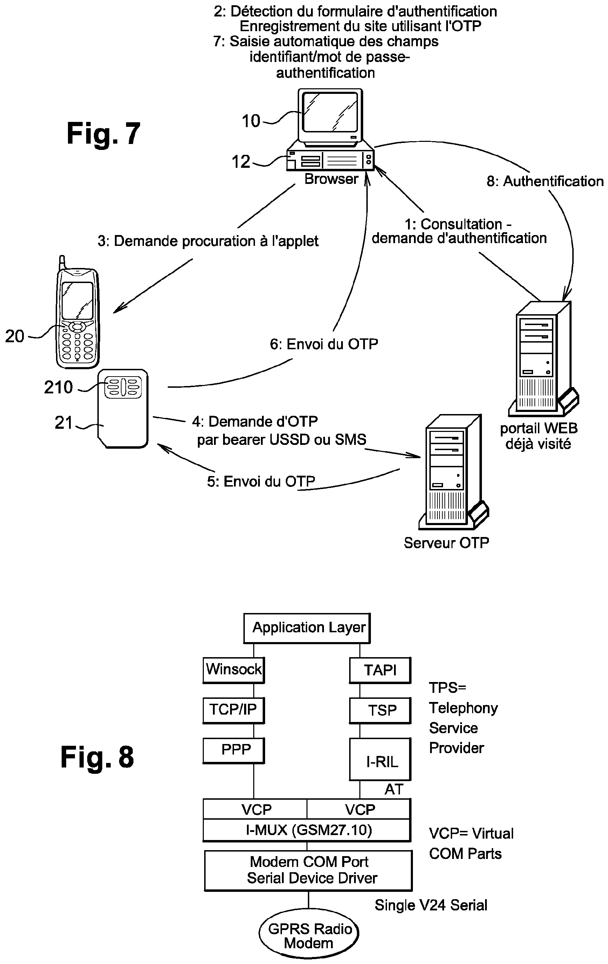

Dans le cadre de l'invention, l'application 210 de gestion dans la carte 21 est utilisée comme gestionnaire d'OTP selon le mode de fonctionnement suivant illustré sur la figure 7 :
1. l'interface logicielle 31 détecte un formulaire d'authentification et le site correspondant est enregistré dans la carte SIM comme site utilisant l'OTP. L'information concernant l'utilisation d'OTP est dans le fichier EF RDPWD (colonne 2 du tableau).
2. l'interface logicielle 31 demande procuration à l'application de gestion de la carte 21 pour faire une demande d'OTP,
3. l'application effectue cette demande d'OTP à un serveur, dont l'adresse est configurée dans la base de données d'authentification c'est à dire dans le bloc de données "config" du fichier EF RDPWD,, par liaison USSD en composant le numéro du serveur d'OTP,
4. l'application de gestion récupère l'OTP,
5. l'application retourne l'OTP à l'interface logicielle 31,
6. l'interface logicielle renseigne le champ « mot de passe » dans la page web du site.

Une application avantageuse de l'invention concerne le cas où les fonctions de l'équipement 10 d'accès sont intégrées dans un téléphone mobile pour constituer ce que l'on appelle un téléphone intelligent (« smartphone »). Dans ce cas, l'interface logicielle 31 est rapportée sur le navigateur mobile (WAP ou XHTML) et communique avec l'application 210 de gestion située dans la carte SIM 21 pour inscrire et récupérer les données d'authentification associées à la page Web considérée. L'implémentation suivante repose sur une plateforme de type Microsoft Windows Mobile représentée sur la figure 8.

Dans cette architecture, une façon d'accéder à la carte SIM logée dans le modem du téléphone est d'utiliser une bibliothèque bas niveau qui est le RIL (Radio Interface Layer) permettant la réalisation de programmes propriétaires ayant les droits d'accès à la carte SIM. Cette couche applicative bas niveau fait l'objet de la demande de brevet EP 1 233 343.

Les fonctions RIL utilisées par l'interface logicielle 31 pour dialoguer avec l'application de gestion sont les suivantes:
▪ *RIL_Initialize()* qui permet d'initialiser le « Driver RIL» pour l'utilisation par un client. Le driver RIL gère le dialogue avec le modem et avec la carte SIM.
▪ *RIL_SendSimToolkitEnvelopeCmd()* qui envoie une commande dite « envelope » à la carte SIM. La commande « envelope » permet de déclencher une application située dans la carte SIM et de lui envoyer des données sous forme de SMS de téléchargement (*SIM Data Download*), de la même façon que si le SMS provenait d'un serveur applicatif.

Le mécanisme de "callback" (fonction de retour) prévu par le RIL permet de récupérer une réponse par rapport à la fonction RIL appelée. En l'occurrence, ce système permet à l'interface logicielle 31 de récupérer les données d'authentification correspondant à l'URL (ou à son condensé) envoyée dans la commande "envelope".

L'utilisation de la commande "*RIL_SendSimToolkitEnvelopeCmd*" permet à l'interface logicielle 31 de déclencher l'application 210 de gestion se trouvant dans la carte SIM et de lui envoyer en donnée entrante l'URL (ou son condensé) du site, encapsulée dans un bloc de données au format 03.48, et, en données sortantes, les données d'authentification encapsulées dans la réponse à la commande. Pour déclencher l'application de gestion, la commande « envelope » doit comporter une entête au format 03.48 dont le champ TAR doit être égal à l'identifiant de l'application sur trois octets. Après déclenchement, l'application de gestion devra demander un code PIN à l'utilisateur de façon à l'authentifier. Pour mettre en œuvre ce dialogue avec l'utilisateur, l'application utilise par exemple les commandes "DISPLAY TEXT" et "GET INPUT" faisant partie du kit de développement nommé SIM TOOLKIT. Les commandes du kit SIM TOOLKIT sont définies dans la norme 31.111 pour le 3G et 11.14 pour le 2G. La commande "DISPLAY TEXT" permet d'affichage de texte sur l'écran du mobile à la demande de l'application. La commande "GET INPUT" permet de retourner à l'application les données saisies par l'utilisateur, en l'occurrence le code PIN.

## Revendications

1. Système de gestion d'au moins une donnée d'authentification d'accès à un service, comprenant
- un équipement (10) d'accès à au moins un service,
- un terminal mobile (20) comportant une carte (21) d'identification sécurisée comprenant des moyens (210) de gestion de ladite donnée d'authentification et d'un identifiant dudit service, lesdits moyens de gestion formant moyens de stockage et de restitution d'identifiants de services ou de condensés d'identifiants de services, et de données d'authentification enregistrées en association avec un identifiant d'un service ou avec un condensé d'un identifiant dudit service lors d'un accès antérieur audit service,
- une interface (32) de communication entre ledit équipement (10) d'accès et lesdits moyens (210) de gestion,
- une interface logicielle (31) apte à :
• détecter automatiquement une demande d'au moins une donnée d'authentification pour un accès à un service, l'accès étant requis par un utilisateur au moyen dudit équipement d'accès,
• accéder à la carte (21) d'identification sécurisée à travers l'interface (32) de communication pour déterminer si un identifiant dudit service, ou un condensé d'un identifiant dudit service, est stocké dans lesdits moyens (210) de gestion,
**caractérisé en ce que** l'interface logicielle est apte à :
• mettre en œuvre lesdits moyens (210) de gestion pour obtenir une donnée d'authentification, préalablement stockée dans les moyens de gestion lors d'un premier accès au service après une détection d'une demande antérieure de donnée d'authentification et requise pour ledit accès, la donnée d'authentification obtenue étant associée à l'identifiant déterminé dudit service ou au condensé déterminé de l'identifiant dudit service.

2. Terminal mobile (20) comportant une carte (21) d'identification sécurisée comprenant des moyens (210) de gestion d'au moins une donnée d'authentification d'accès à un service et d'un identifiant dudit service,
lesdits moyens de gestion formant moyens de stockage et de restitution d'identifiants de services ou de condensés d'identifiants de services, et de données d'authentification enregistrées en association avec un identifiant d'un service ou avec un condensé d'un identifiant dudit service lors d'un accès antérieur audit service,
lesdits moyens (210) de gestion étant aptes à être reliés par une interface (32) de communication à un équipement (10) d'accès au moyen duquel un utilisateur requiert un accès à un service,
**caractérisé en ce que** : lesdits moyens de gestion sont aptes à être mis en œuvre à travers ladite interface (32) de communication par une interface logicielle (31) apte à détecter automatiquement une demande d'au moins une donnée d'authentification pour le service pour lequel ledit accès est requis, à accéder à la carte (21) d'identification sécurisée pour déterminer si un identifiant dudit service, ou un condensé d'un identifiant dudit service est stocké dans lesdits moyens (210) de gestion, et à fournir une donnée d'authentification préalablement stockée dans les moyens de gestion lors d'un premier accès au service après une détection d'une demande antérieure de donnée d'authentification et requise pour ledit accès, la donnée d'authentification obtenue étant associée à l'identifiant déterminé dudit service ou au condensé déterminé de l'identifiant dudit service.

3. Terminal selon la revendication 2, **caractérisé en ce que** lesdits moyens (210) de gestion sont implantés dans un module de sécurité du terminal mobile.

4. Terminal selon la revendication 2, **caractérisé en ce que** lesdits moyens (210) de gestion sont implantés dans une mémoire dudit terminal mobile.

5. Terminal selon la revendication 2 dans lequel lesdits moyens (210) de gestion sont mis en œuvre au moyen de commandes AT permettant l'écriture, dans un module de sécurité dudit terminal mobile de messages courts destinés à être lus par lesdits moyens de gestion.

6. Terminal selon l'une quelconque des revendications 2 à 5, **caractérisé en ce que** ledit terminal mobile (20) comporte des moyens pour communiquer avec un fournisseur de données d'authentification (OTP) accessible via un réseau de téléphonie mobile.

7. Terminal selon l'une quelconque des revendications 2 à 6, **caractérisé en ce que** lesdits moyens (210) de gestion sont protégés en lecture et écriture par un code d'identification.

8. Interface logicielle (31) entre un équipement (10) d'accès à au moins un service et des moyens (210) de gestion dans une carte (21) d'identification sécurisée d'un terminal mobile d'au moins une donnée d'authentification et d'un identifiant dudit service, lesdits moyens de gestion (210) formant moyens de stockage et de restitution d'identifiants de services ou de condensés d'identifiants de services, et de données d'authentification enregistrées en association avec un identifiant d'un service ou avec un condensé d'un identifiant dudit service lors d'un accès antérieur audit service,
ladite interface logicielle (31) étant apte à détecter automatiquement une demande d'au moins une donnée d'authentification pour le service pour lequel un accès est requis par un utilisateur au moyen d'un équipement d'accès, à accéder à la carte (21) d'identification sécurisée à travers l'interface (32) de communication pour déterminer si un identifiant dudit service, ou un condensé d'un identifiant dudit service est stocké dans lesdits moyens (210) de gestion, et **caractérisée en ce qu'**elle est apte à mettre en œuvre lesdits moyens (210) de gestion pour obtenir une donnée d'authentification préalablement stockée dans les moyens de gestion lors d'un premier accès au service après une détection d'une demande antérieure de donnée d'authentification et requise pour ledit accès, la donnée d'authentification obtenue étant associée à l'identifiant déterminé dudit service ou associée au condensé déterminé de l'identifiant dudit service.

9. Interface logicielle selon la revendication 8, **caractérisé en ce que** ladite interface logicielle est apte à détecter la présence d'un formulaire d'authentification présenté à l'utilisateur par ledit équipement d'accès et à injecter la donnée d'authentification obtenue dans le formulaire d'authentification présenté audit utilisateur.

10. Interface logicielle selon la revendication 8, **caractérisé en ce que** ladite interface logicielle transmet auxdits moyens de gestion au moins une donnée d'authentification saisie par un utilisateur pour un accès à un service en vue de son stockage en association avec un identifiant de ce service.

11. Interface logicielle selon la revendication 8, **caractérisé en ce que** la donnée d'authentification requise est un mot de passe à usage unique, ladite interface logicielle demande procuration aux moyens de gestion pour faire une demande de mot de passe à usage unique.

12. Equipement d'accès à au moins un service, comprenant une interface logicielle selon la revendication 8.

13. Procédé de gestion d'au moins une donnée d'authentification d'accès à un service, ledit procédé étant mis en œuvre au moyen d'une interface logicielle (31), et comprenant les étapes consistant à :
- détecter automatiquement une demande de donnée d'authentification pour un accès au service, l'accès étant requis par un utilisateur au moyen d'un équipement (10) d'accès,
- déterminer, à travers une interface (32) de communication entre ledit équipement (10) d'accès et des moyens (210) de gestion de ladite donnée d'authentification et d'un identifiant d'accès au service, les moyens (210) de gestion étant compris dans une carte (21) d'identification sécurisée, si l'identifiant de service, ou un condensé de l'identifiant de service, est stocké dans lesdits moyens (210) de gestion, en accédant à la carte d'identification sécurisée (21),
ledit procédé étant **caractérisé en ce qu'**il consiste à :
- mettre en œuvre les moyens (210) de gestion pour obtenir une donnée d'authentification préalablement stockée dans les moyens de gestion lors d'un premier accès au service après une détection d'une demande antérieure de donnée d'authentification et requise pour ledit accès, la donnée d'authentification obtenue étant associée à l'identifiant déterminé du service ou associée au condensé déterminé de l'identifiant du service,
lesdits moyens (210) de gestion formant moyens de stockage et de restitution d'identifiants de services ou de condensés d'identifiants de services, et de données d'authentification enregistrées en association avec un identifiant d'un service ou avec un condensé d'un identifiant dudit service lors d'un accès antérieur audit service.

14. Procédé selon la revendication 13, dans lequel ladite interface logicielle détecte la présence d'un formulaire d'authentification présenté à l'utilisateur par ledit équipement d'accès et injecte la donnée d'authentification obtenue dans le formulaire d'authentification présenté audit utilisateur.

15. Procédé selon la revendication 13, dans lequel ladite interface logicielle transmet auxdits moyens de gestion au moins une donnée d'authentification saisie par un utilisateur pour un accès à un service en vue de son stockage en association avec un identifiant de ce service.

16. Procédé selon la revendication 13, dans lequel lorsque la donnée d'authentification requise est un mot de passe à usage unique, ladite interface logicielle demande procuration aux moyens de gestion pour faire une demande de mot de passe à usage unique.

## Patentansprüche

1. System zur Verwaltung mindestens einer Authentifizierungsangabe zum Zugriff auf einen Dienst, umfassend
- eine Ausrüstung (10) zum Zugriff auf mindestens einen Dienst,
- ein mobiles Endgerät (20) mit einer sichere Identifikationskarte (21) umfassend Mittel (210) zur Verwaltung der Authentifizierungsangabe und einer Kennung des Dienstes, wobei die Verwaltungsmittel Mittel zur Speicherung und zur Wiedergabe von Dienstkennungen oder Kurzfassungen von Dienstkennungen bilden, und von Authentifizierungsangaben, die in Verbindung mit einer Kennung eines Dienstes oder mit einer Kurzfassung einer Kennung des Dienstes bei einem früheren Zugriff auf den Dienst aufgezeichnet wurden,
- eine Schnittstelle (32) zur Kommunikation zwischen der Zugriffsausrüstung (10) und den Verwaltungsmitteln (210),
- eine Softwareschnittstelle (31), die geeignet ist:
• eine Anforderung mindestens einer Authentifizierungsangabe für einen Zugriff auf einen Dienst automatisch zu detektieren, wobei der Zugriff von einem Benutzer mittels der Zugriffsausrüstung gefordert wird,
• über die Kommunikationsschnittstelle (32) auf die gespeicherte Identifikationskarte (21) zuzugreifen, um zu bestimmen, ob eine Kennung des Dienstes oder eine Kurzfassung einer Kennung des Dienstes in den Verwaltungsmitteln (210) gespeichert ist,
**dadurch gekennzeichnet, dass** die Softwareschnittstelle geeignet ist:
• die Verwaltungsmittel (210) einzusetzen, um eine Authentifizierungsangabe zu erhalten, die zuvor bei einem ersten Zugriff auf den Dienst in den Verwaltungsmitteln gespeichert wurde, nach einer Detektion einer früheren Anforderung einer Authentifizierungsangabe, und für den Zugriff erforderlich ist, wobei die erhaltene Authentifizierungsangabe mit der bestimmten Kennung des Dienstes oder der bestimmten Kurzfassung der Kennung des Dienstes in Verbindung steht.

2. Mobiles Endgerät (20) mit einer sicheren Identifikationskarte (21) umfassend Mittel (210) zur Verwaltung mindestens einer Authentifizierungsangabe zum Zugriff auf einen Dienst und einer Kennung des Dienstes, wobei die Verwaltungsmittel Mittel zur Speicherung und zur Wiedergabe von Dienstkennungen oder Kurzfassungen von Dienstkennungen bilden, und von Authentifizierungsangaben, die in Verbindung mit einer Kennung eines Dienstes oder mit einer Kurzfassung einer Kennung des Dienstes bei einem früheren Zugriff auf den Dienst aufgezeichnet wurden, wobei die Verwaltungsmittel (210) geeignet sind, durch eine Kommunikationsschnittstelle (32) mit einer Zugriffsausrüstung (10) verbunden zu sein, mittels welcher ein Benutzer einen Zugriff auf einen Dienst fordert,
**dadurch gekennzeichnet, dass**:
die Verwaltungsmittel geeignet sind, über die Kommunikationsschnittstelle (32) durch eine Softwareschnittstelle (31) eingesetzt zu werden, die geeignet ist, eine Anforderung mindestens einer Authentifizierungsangabe für den Dienst automatisch zu detektieren, für welchen der Zugriff gefordert wird, auf die sichere Identifikationskarte (21) zuzugreifen, um zu bestimmen, ob eine Kennung des Dienstes oder eine Kurzfassung einer Kennung des Dienstes in den Verwaltungsmitteln (210) gespeichert ist, und eine Authentifizierungsangabe bereitzustellen, die zuvor in den Verwaltungsmitteln bei einem früheren Zugriff auf den Dienst gespeichert wurde, nach einer Detektion einer früheren Anforderung einer Authentifizierungsangabe, und für den Zugriff erforderlich ist, wobei die erhaltene Authentifizierungsangabe mit der bestimmten Kennung des Dienstes oder mit der bestimmten Kurzfassung der Kennung des Dienstes in Verbindung steht.

3. Endgerät nach Anspruch 2, **dadurch gekennzeichnet, dass** die Verwaltungsmittel (210) in einem Sicherheitsmodul des mobilen Endgeräts implantiert sind.

4. Endgerät nach Anspruch 2, **dadurch gekennzeichnet, dass** die Verwaltungsmittel (210) in einem Speicher des mobilen Endgeräts implantiert sind.

5. Endgerät nach Anspruch 2, wobei die Verwaltungsmittel (210) mittels eines AT-Befehlssatzes eingesetzt werden, der das Schreiben von Kurznachrichten in einem Sicherheitsmodul des mobilen Endgeräts gestattet, die dazu bestimmt sind, von den Verwaltungsmitteln gelesen zu werden.

6. Endgerät nach einem der Ansprüche 2 bis 5, **dadurch gekennzeichnet, dass** das mobile Endgerät (20) Mittel aufweist, um mit einem Lieferanten von Authentifizierungsangaben (OTP) zu kommunizieren, auf den über ein Mobilfunknetz zugegriffen werden kann.

7. Endgerät nach einem der Ansprüche 2 bis 6, **dadurch gekennzeichnet, dass** die Verwaltungsmittel (210) durch einen Identifikationsscode lese- und schreibgeschützt sind.

8. Softwareschnittstelle (31) zwischen einer Ausrüstung (10) zum Zugriff auf mindestens einen Dienst und Verwaltungsmitteln (210) in einer sicheren Identifikationskarte (21) eines mobilen Endgeräts mindestens einer Authentifizierungsangabe und einer Kennung des Dienstes, wobei die Verwaltungsmittel (210) Mittel zur Speicherung und zur Wiedergabe von Dienstkennungen oder Kurzfassungen von Dienstkennungen bilden, und von Authentifizierungsangaben, die in Verbindung mit einer Kennung eines Dienstes oder mit einer Kurzfassung einer Kennung des Dienstes bei einem früheren Zugriff auf den Dienst aufgezeichnet wurden, wobei die Softwareschnittstelle (31) geeignet ist, eine Anforderung mindestens einer Authentifizierungsangabe für den Dienst automatisch zu detektieren, für welchen von einem Benutzer mittels einer Zugriffsausrüstung ein Zugriff gefordert wird, auf die sichere Identifikationskarte (21) über die Kommunikationsschnittstelle (32) zuzugreifen, um zu bestimmen, ob eine Kennung des Dienstes oder eine Kurzfassung einer Kennung des Dienstes in den Verwaltungsmitteln (210) gespeichert ist, und **dadurch gekennzeichnet, dass** sie geeignet ist, die Verwaltungsmittel (210) einzusetzen, um eine Authentifizierungsangabe zu erhalten, die zuvor in den Verwaltungsmitteln bei einem ersten Zugriff auf den Dienst gespeichert wurde, nach einer Detektion einer früheren Anforderung einer Authentifizierungsangabe, und für den Zugriff erforderlich ist, wobei die erhaltene Authentifizierungsangabe mit der bestimmten Kennung des Dienstes oder mit der bestimmten Kurzfassung der Kennung des Dienstes in Verbindung steht.

9. Softwareschnittstelle nach Anspruch 8, **dadurch gekennzeichnet, dass** die Softwareschnittstelle geeignet ist, das Vorhandensein eines Authentifizierungsformulars zu detektieren, das dem Benutzer durch die Zugriffsausrüstung präsentiert wird, und die Authentifizierungsangabe zu injizieren, die aus dem Authentifizierungsformular erhalten wird, das dem Benutzer präsentiert wird.

10. Softwareschnittstelle nach Anspruch 8, **dadurch gekennzeichnet, dass** die Softwareschnittstelle mindestens eine Authentifizierungsangabe, die durch einen Benutzer für einen Zugriff auf einen Dienst eingegeben wurde, mit dem Ziel ihrer Speicherung in Verbindung mit einer Kennung dieses Dienstes an die Verwaltungsmittel überträgt.

11. Softwareschnittstelle nach Anspruch 8, **dadurch gekennzeichnet, dass** die erforderliche Authentifizierungsangabe ein Einmalpasswort ist, die Softwareschnittstelle bei den Verwaltungsmitteln eine Vollmacht anfordert, um ein Einmalpasswort anzufordern.

12. Ausrüstung zum Zugriff auf mindestens einen Dienst, umfassend eine Softwareschnittstelle nach Anspruch 8.

13. Verfahren zur Verwaltung mindestens einer Authentifizierungsangabe zum Zugriff auf einen Dienst, wobei das Verfahren mittels einer Softwareschnittstelle (31) umgesetzt wird, und die Schritte umfasst, die darin bestehen:
- eine Anforderung einer Authentifizierungsangabe für einen Zugriff auf den Dienst automatisch zu detektieren, wobei der Zugriff von einem Benutzer mittels einer Zugriffsausrüstung (10) gefordert wird,
- zu bestimmen, über eine Kommunikationsschnittstelle (32) zwischen der Zugriffsausrüstung (10) und Mitteln (210) zur Verwaltung der Authentifizierungsangabe und einer Kennung zum Zugriff auf den Dienst, wobei die Verwaltungsmittel (210) in einer sicheren Identifikationskarte (21) enthalten sind, ob die Dienstkennung oder eine Kurzfassung der Dienstkennung in den Verwaltungsmitteln (210) gespeichert ist, wobei auf die sichere Identifikationskarte (21) zugegriffen wird, wobei das Verfahren **dadurch gekennzeichnet ist, dass** es darin besteht:
- die Verwaltungsmittel (210) einzusetzen, um eine Authentifizierungsangabe zu erhalten, die zuvor bei einem ersten Zugriff auf den Dienst in den Verwaltungsmitteln gespeichert wurde, nach einer Detektion einer früheren Anforderung einer Authentifizierungsangabe, und für den Zugriff erforderlich ist, wobei die erhaltene Authentifizierungsangabe mit der bestimmten Kennung des Dienstes in Verbindung steht oder mit der bestimmten Kurzfassung der Kennung des Dienstes in Verbindung steht,
wobei die Verwaltungsmittel (210) Mittel zur Speicherung und zur Wiedergabe von Dienstkennungen oder Kurzfassungen von Dienstkennungen bilden, und von Authentifizierungsangaben, die in Verbindung mit einer Kennung eines Dienstes oder mit einer Kurzfassung einer Kennung des Dienstes bei einem früheren Zugriff auf den Dienst aufgezeichnet wurden.

14. Verfahren nach Anspruch 13, wobei die Softwareschnittstelle das Vorhandensein eines Authentifizierungsformulars detektiert, das dem Benutzer durch die Zugriffsausrüstung präsentiert wird, und die Authentifizierungsangabe injiziert, die in dem Authentifizierungsformular erhalten wird, das dem Benutzer präsentiert wird.

15. Verfahren nach Anspruch 13, wobei die Softwareschnittstelle mindestens eine Authentifizierungsangabe, die durch einen Benutzer für einen Zugriff auf einen Dienst eingegeben wurde, mit dem Ziel ihrer Speicherung in Verbindung mit einer Kennung dieses Dienstes an die Verwaltungsmittel überträgt.

16. Verfahren nach Anspruch 13, wobei, wenn die erforderliche Authentifizierungsangabe ein Einmalpasswort ist, die Softwareschnittstelle bei den Verwaltungsmitteln eine Vollmacht anfordert, um ein Einmalpasswort anzufordern.

## Claims

1. System for managing at least one authentication datum for access to a service, comprising
- an access equipment (10) for access to at least one service,
- a mobile terminal (20) including a secure identification card (21) comprising management means (210) for managing both said authentication datum and an identifier of said service, said management means forming means for storing and rendering service identifiers or service identifier digests, and authentication data that are recorded together with an identifier of a service or with a digest of an identifier of said service during a prior access to said service,
- a communication interface (32) between said access equipment (10) and said management means (210),
- a software interface (31) capable of:
• automatically detecting a request for at least one authentication datum for an access to a service, the access being requested by a user by means of said access equipment,
• accessing the secure identification card (21) through the communication interface (32) in order to determine whether an identifier of said service, or a digest of an identifier of said service, is stored in said management means (210),
**characterized in that** the software interface is capable of:
• implementing said management means (210) to obtain an authentication datum, stored beforehand in the management means during a first access to the service after a detection of a prior authentication-datum request and requested for said access, the obtained authentication datum being associated with the determined identifier of said service or with the determined digest of the identifier of said service.

2. Mobile terminal (20) including a secure identification card (21) comprising management means (210) for managing both at least one authentication datum for access to a service and an identifier of said service, said management means forming means for storing and rendering service identifiers or service identifier digests, and authentication data that are recorded together with an identifier of a service or with a digest of an identifier of said service during a prior access to said service,
said management means (210) being capable of being connected, via a communication interface (32), to an access equipment (10) by means of which a user requests an access to a service,
**characterized in that**:
said management means are capable of being implemented through said communication interface (32) by a software interface (31) that is capable of automatically detecting a request for at least one authentication datum for the service for which said access is requested, of accessing the secure identification card (21) in order to determine whether an identifier of said service, or a digest of an identifier of said service, is stored in said management means (210), and of providing an authentication datum stored beforehand in the management means during a first access to the service after a detection of a prior authentication-datum request and requested for said access, the obtained authentication datum being associated with the determined identifier of said service or with the determined digest of the identifier of said service.

3. Terminal according to Claim 2, **characterized in that** said management means (210) are installed in a security module of the mobile terminal.

4. Terminal according to Claim 2, **characterized in that** said management means (210) are installed in a memory of said mobile terminal.

5. Terminal according to Claim 2, wherein said management means (210) are implemented by means of AT commands allowing the writing, in a security module of said mobile terminal, of short messages that are intended to be read by said management means.

6. Terminal according to any one of Claims 2 to 5, **characterized in that** said mobile terminal (20) includes means for communicating with an authentication data provider (OTP) that is accessible via a mobile telephone network.

7. Terminal according to any one of Claims 2 to 6, **characterized in that** said management means (210) are read- and write-protected by an identification code.

8. Software interface (31) between an access equipment (10) for access to at least one service and management means (210) in a secure identification card (21) of a mobile terminal for managing both at least one authentication datum and an identifier of said service, said management means (210) forming means for storing and rendering service identifiers or service identifier digests, and authentication data that are recorded together with an identifier of a service or with a digest of an identifier of said service during a prior access to said service, said software interface (31) being capable of automatically detecting a request for at least one authentication datum for the service for which an access is requested by a user by means of an access equipment, of accessing the secure identification card (21) through the communication interface (32) in order to determine whether an identifier of said service, or a digest of an identifier of said service, is stored in said management means (210), and **characterized in that** it is capable of implementing said management means (210) to obtain an authentication datum stored beforehand in the management means during a first access to the service after a detection of a prior authentication-datum request and requested for said access, the obtained authentication datum being associated with the determined identifier of said service or associated with the determined digest of the identifier of said service.

9. Software interface according to Claim 8, **characterized in that** said software interface is capable of detecting the presence of an authentication form presented to the user by said access equipment and of inserting the obtained authentication datum into the authentication form presented to said user.

10. Software interface according to Claim 8, **characterized in that** said software interface transmits, to said management means, at least one authentication datum entered by a user for an access to a service with a view to its storage together with an identifier of this service.

11. Software interface according to Claim 8, **characterized in that** the requested authentication datum is a one-time password, said software interface sends a proxy request to the management means to make a one-time-password request.

12. Access equipment for access to at least one service, comprising a software interface according to Claim 8.

13. Management method for managing at least one authentication datum for access to a service, said method being implemented by means of a software interface (31), and comprising the steps of:
- automatically detecting an authentication-datum request for an access to the service, the access being requested by a user by means of an access equipment (10),
- determining, through a communication interface (32) between said access equipment (10) and management means (210) for managing both said authentication datum and an identifier for access to the service, the management means (210) being comprised within a secure identification card (21), whether the service identifier, or a digest of the service identifier, is stored in said management means (210), by accessing the secure identification card (21),
said method being **characterized in that** it consists of:
- implementing the management means (210) to obtain an authentication datum stored beforehand in the management means during a first access to the service after a detection of a prior authentication-datum request and requested for said access, the obtained authentication datum being associated with the determined identifier of the service or associated with the determined digest of the identifier of the service,
said management means (210) forming means for storing and rendering service identifiers or service identifier digests, and authentication data that are recorded together with an identifier of a service or with a digest of an identifier of said service during a prior access to said service.

14. Method according to Claim 13, wherein said software interface detects the presence of an authentication form presented to the user by said access equipment and inserts the obtained authentication datum into the authentication form presented to said user.

15. Method according to Claim 13, wherein said software interface transmits, to said management means, at least one authentication datum entered by a user for an access to a service with a view to its storage together with an identifier of this service.

16. Method according to Claim 13, wherein, when the requested authentication datum is a one-time password, said software interface sends a proxy request to the management means to make a one-time-password request.
